# EUROPEAN PATENT APPLICATION

(11) **EP 3 290 694 A1**
(43) Date of publication of application: **07.03.2018**
(21) Application number: 16186611.6
(22) Date of filing: 31.08.2016
(51) Int. Cl.: F03D 80/80, F03D 13/10

(54) **WIND TURBINE**

(71) Applicant: Siemens Aktiengesellschaft, 80333 München (DE)
(72) Inventor: Loader, Carl Edward, 8361 Hasselager (DK); Munk-Hansen, Thorkil, DK / 7000 Fredericia (DK); Oest, Thomas, 7900 Erslev (DK)

(57) **Abstract**

Wind turbine (3), comprising a nacelle, a tower (12), a yaw structure (2) and a rotor (11), whereby a horizontal plate (1) is connected to or integrally built with the yaw structure (2) with the horizontal plate (1) being connected to a beam (4) extending horizontally away from the horizontal plate (1) and being connected to the rear structure (9) of the wind turbine (3).

## Description

The invention relates to a wind turbine, comprising a nacelle, a tower, a yaw structure and a rotor.

In conventional wind turbines, as known from prior art, a vertical flat connection plate at the bedframe or the yaw section, respectively, is connected to a flat vertical plate at the rear structure of the wind turbine. In particular the two plates are bolted together, resulting in high loads in the bolts. In operation of the wind turbine high bending forces are transferred over the plates, in particular compressive forces in the lower part and high stress on the bolts in the upper part. Furthermore there are high dynamic loads in operation of the wind turbine.

The construction known from prior art therefore is limited regarding the size of the rear structure, as with increasing size of the rear structure the bolts, that connect the two vertical plates tend to be overloaded and damaged.

Therefore, it is an object of the invention to provide a wind turbine with an improved connection between the rear structure and the yaw structure.

This is inventively achieved by a wind turbine as initially described, whereby a horizontal plate is connected to or integrally built with the yaw structure, with the horizontal plate being connected to a beam extending horizontally away from the horizontal plate and being connected to the rear structure.

The invention is based on the consideration that instead of having two vertical plates connected to each other, the vertical connection plates are replaced by a beam that rests on the horizontal plate and is connected with the horizontal plate. Mechanical stress and the compressive forces, that are present in the connection plates according to the principle known from prior art, can be avoided, as the inventive wind turbine comprises a beam that connects the yaw section with the rear structure. Therefore the load distribution resulting from the beam being connected to the horizontal plate differs from the connection principle known from prior art in that there is much less compressive force and mechanical stress. Therefore by way of the invention bigger rear structures can be realized without the risk of overloading and damaging the connection means. Preferably the beam is an I-beam or a double T-beam and is connected by bolts with the horizontal plate.

According to an advantageous embodiment of the invention the yaw structure comprises at least a first vertical connection plate and the beam comprises at least a second vertical connection plate, whereby the vertical connection plates are connected. In particular the beam that is connected to the rear structure or is part of the rear structure comprises a second vertical plate at the end facing the horizontal plate or pointing away from the rear structure, respectively. The horizontal plate comprises or is connected with a first vertical plate, corresponding to the second vertical plate of the beam. The beam rests on the horizontal plate, whereby the first and the second vertical plates are connected, for example by bolts.

Preferably the second connection plate, which is connected to the beam, is detachably connected, for example by bolts, which improves the transportability of the beam, as the second vertical plate can be detached from the beam to simplify the transportation. For the assembly of the beam with the horizontal plate the second vertical plate can be attached.

Advantageously, the horizontal plate is supported by at least a third vertical plate that is connected to the rear structure of the wind turbine. The third vertical plate can be connected to the first vertical plate via the horizontal plate or can additionally be connected to the first vertical plate. The third vertical plate can be integrally built with the yaw structure or attached to it by bolts. Therefore the third vertical plate and also the second vertical plate can be used to support the horizontal plate, as they are connected to it and connected to the yaw structure, so that they can absorb forces induced into the horizontal plate and pass those forces into the yaw structure.

More preferably the horizontal plate is supported by at least a fourth vertical plate that is arranged below the horizontal plate and is connected or integrally built with the yaw structure. The at least one fourth vertical plate is therefore arranged below the horizontal plate and supports the horizontal plate against the yaw structure. By having the fourth connection plate being integrally built with or casted in one piece with the yaw structure there are advantageously less connections to fasten and the connection between the yaw structure and the fourth vertical plate results in a more rigid construction.

According to another embodiment of the invention the horizontal plate has a traverse groove. The traverse groove allows for a better load distribution and less fatigue effects in the horizontal plate supporting the beam.

Preferably the beam has a length of more than 1 m, preferably 1.5 m, and less than 5 m. More preferably the beam and/or the horizontal plate has a width of more than 0.3 m and less than 5 m. Therefore the beam, extending horizontally away from the horizontal plate offers enough space to connect parts of the rear structure of the wind turbine with the beam that can be connected via the beam with the yaw structure without inducing high bending forces to the connection of the beam and the horizontal plate.

According to another advantageous embodiment of the invention the width of the at least one vertical plate matches the width of the horizontal plate and/or the width of the beam. Therefore the first and second vertical plates can have the same width, thus being superposeable in the connected state. More preferably the vertical plates have a length of more than 0.15 m and less than 2 m.

In the following, the invention is described in detail, whereby references are made to the principle drawings, which show:
- Figure 1: a perspective view of an horizontal plate and a beam of an inventive wind turbine;
- Figure 2: a side view of the horizontal plate and the beam of figure 1;
- Figure 3: a sectional view of an inventive wind turbine; and
- Figure 4: a perspective detail of the wind turbine of figure 3.

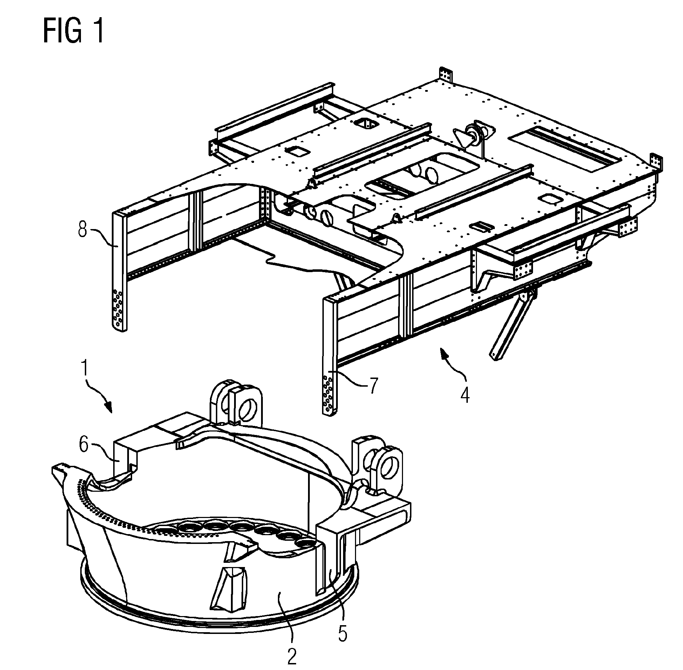

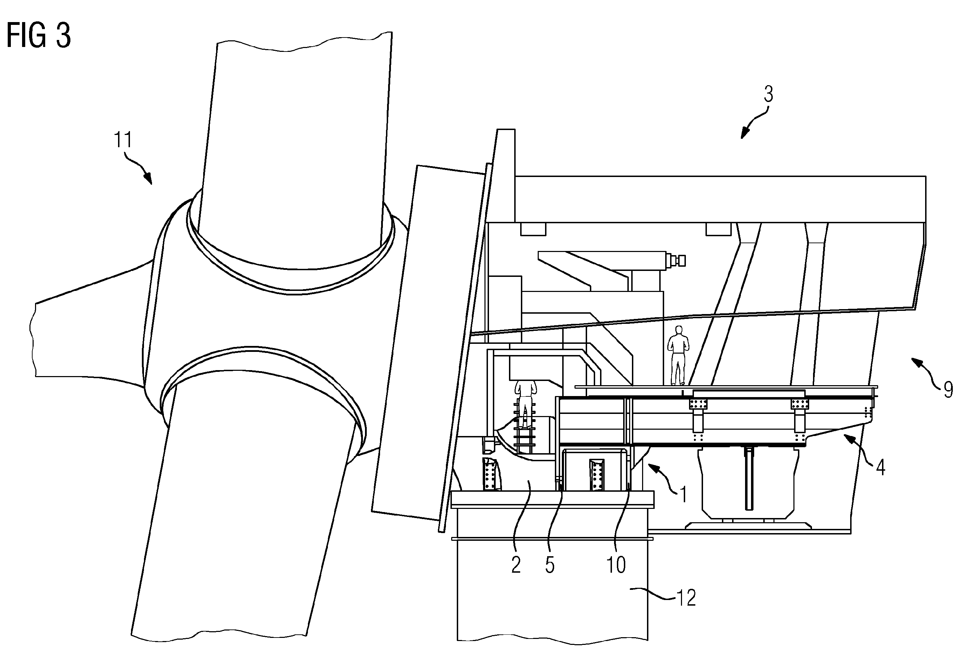

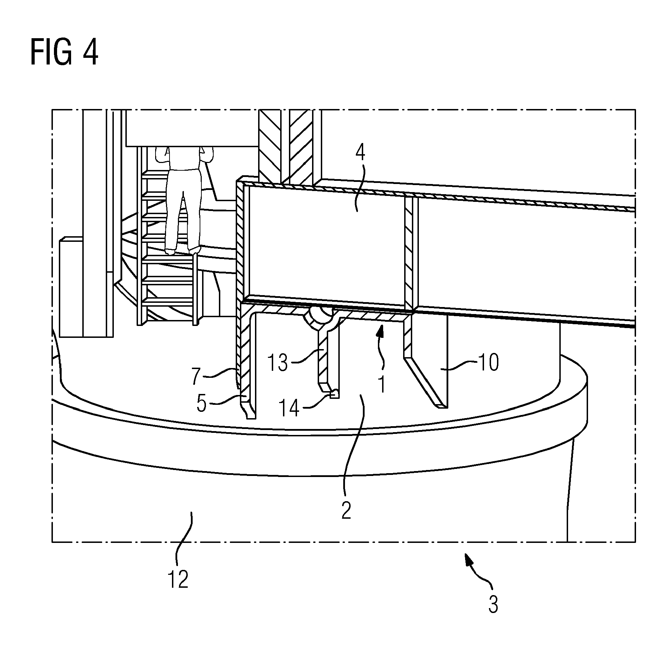

Figure 1 shows a horizontal plate 1 that is connected to a yaw structure 2 of a wind turbine 3 (shown in figure 3, 4) and a beam 4. According to this example of the invention the beam 4 is built as an I-beam.

As can be seen from figure 1 the horizontal plate 1 is connected to two first vertical plates 5, 6 that correspond to second vertical plates 7, 8 that are detachably connected to the beam 4. The second vertical plates 7, 8 are connected to the beam 4 at the end of the beam 4 that faces away from the rear structure 9 of the wind turbine 3. The rear structure 9 and the beam 4 are part of the nacelle of the wind turbine 3. The first vertical plates 5, 6 are connected to the horizontal plate 1 and support the horizontal plate 1 against the yaw structure 2.

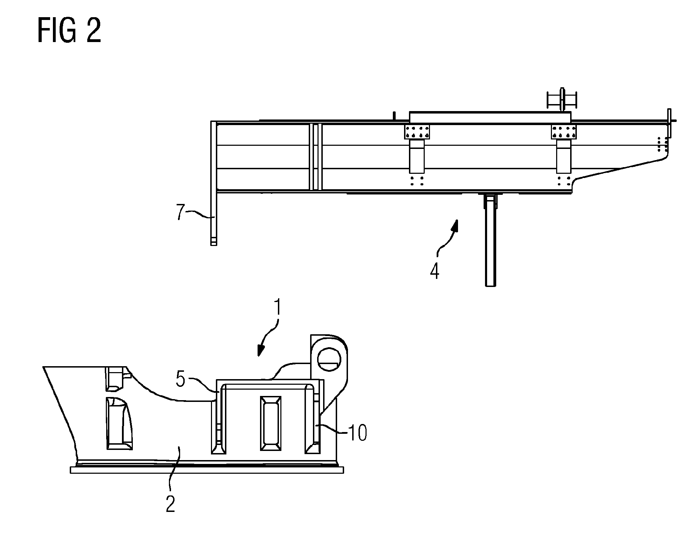

Figure 2 shows a side view of the beam 4 and the horizontal plate 1 from figure 1. In a connected state of the beam 4 with the horizontal plate 1 the first vertical plates 5, 6 and the second vertical plates 7, 8 abut each other and the beam 4 rests on the horizontal plate 1. As can be seen from figure 2 there is a third vertical plate 10 arranged below the horizontal plate 1 that supports the horizontal plate 1 against the yaw structure 2. Of course there is another third vertical plate arranged symmetrically on the opposite side of the yaw structure 2.

Figure 3 shows a sectional view of the wind turbine 3. The wind turbine 3 comprises a rotor 11 and tower 12, whereby the tower 12 is attached to the yaw structure 2. The beam 4 is attached to the horizontal plate 1, which is connected to the yaw structure 2. As can be seen, there are multiple components of the rear structure 9 connected to the beam 4, whereby the loads induced on the beam 4 are passed into the yaw structure 2 via the horizontal plate 1 without inducing high mechanical stress or compressive forces compared to conventional wind turbines.

Figure 4 shows a perspective view of the wind turbine 3 of figure 3. The beam 4 and its attachment to the horizontal plate 1 via the first vertical plate 5 and the second vertical plate 7, which abut each other, is depicted. The horizontal plate 1 is supported by a third vertical plate 10 and a fourth vertical plate 13 being arranged in a groove 14 in the yaw structure 2.

Although the present invention has been described in detail with reference to the preferred embodiment, the present invention is not limited by the disclosed examples from which the skilled person is able to derive other variations without departing from the scope of the invention.

## Claims

1. Wind turbine (3), comprising a nacelle, a tower (12), a yaw structure (2) and a rotor (11), **characterized in that** a horizontal plate (1) is connected to or integrally built with the yaw structure (2) with the horizontal plate (1) being connected to a beam (4) extending horizontally away from the horizontal plate (1) and being connected to the rear structure (9) of the wind turbine (3).

2. Wind turbine according to claim 1, **characterized in that** the yaw structure (2) comprises at least a first vertical connection plate (5, 6) and the beam (4) comprises at least a second vertical connection plate (7, 8), whereby the vertical connection plates (5 - 8) are connected.

3. Wind turbine according to claim 2, **characterized in that** the at least one second vertical connection plate (7, 8) is detachably connected to the beam (4).

4. Wind turbine according to claim 1 or 2, **characterized in that** the horizontal plate (1) is supported by at least a third vertical plate (10), that is connected to a rear structure (9) of the wind turbine (3).

5. Wind turbine according to one of the preceding claims, **characterized in that** the horizontal plate (1) is supported by at least a fourth vertical plate (13) that is arranged below the horizontal plate (1) and is connected or integrally built with the yaw structure (2).

6. Wind turbine according to one of the preceding claims, **characterized in that** the horizontal plate (1) has a traverse groove.

7. Wind turbine according to one of the preceding claims, **characterized in that** the beam (4) has a length of more than 1 m, preferably 1.5 m, and less than 5 m.

8. Wind turbine according to one of the preceding claims, **characterized in that** the beam (4) and/or the horizontal plate (1) has a width of more than 0.3 m and less than 5 m.

9. Wind turbine according to one of the preceding claims, **characterized in that** the width of the at least one vertical plate (5 - 8, 10, 13) matches the width of the horizontal plate (1) and/or the width of the beam (4).

10. Wind turbine according to one of the preceding claims, **characterized in that** the vertical plates (5 - 8, 10, 13) have a length of more than 0.5 m and less than 5 m.
